# EUROPEAN PATENT SPECIFICATION

(11) **EP 1 046 143 B1**
(45) Date of publication and mention of the grant of the patent: **04.12.2002**
(21) Application number: 99950534.0
(22) Date of filing: 20.09.1999
(51) Int. Cl.: G07F 7/10, G06K 19/073

(54) **DATA CARRIER DEVICE WITH DATA BUS MEANS WHOSE POWER CONSUMPTION IS INDEPENDENT OF DATA TRANSMITTED VIA THE DATA BUS MEANS**
DATENTRÄGERVORRICHTUNG MIT DATENBUS DEREN ENERGIEVERBRAUCH UNABHÄNGIG IST VON DEN ÜBER DEN DATENBUS GESENDETEN DATEN
DISPOSITIF POUR SUPPORT DE DONNEES POURVU D'UN BUS DE DONNEES DONT LA CONSOMMATION ELECTRIQUE N'EST PAS LIEE AUX DONNEES TRANSMISES VIA LE BUS DE DONNEES

(30) Priority: 30.09.1998 EP 98890277
(43) Date of publication of application: 25.10.2000
(73) Proprietor: Koninklijke Philips Electronics N.V., 5621 BA Eindhoven (NL)
(72) Inventor: POSCH, Stefan, NL-5656 AA Eindhoven (NL)
(74) Representative: Röggla, Harald
(86) International application number: EP9907023
(87) International publication number: WO00019385

(56) References cited:
- US-A- 4 295 041
- US-A- 4 501 958
- US-A- 4 912 308

## Description

The invention relates to a data carrier device which includes data storage means for the storage of key data, processing means for the processing of key data, and data bus means which include a data bus with a number of N parallel data leads which connects the data storage means to the processing means and via which N-bit key data can be transmitted in parallel during each transmission operation, and also includes power supply means for power supply of the data carrier device.

A data carrier device of the kind set forth in the first paragraph is known from the document US 4,295,041 and consists of an anti-theft device. The known data carrier device includes data storage means which store confidential key data and further confidential data. The data carrier device outputs the stored confidential data only to an authorized user of the data carrier device who provides proof of being authorized by application of the confidential key data stored in the data storage means to receiving means of the data carrier device.

The known data carrier device also includes data processing means which are formed by a microprocessor and are arranged for the processing of confidential data during which a program routine, stored in program storage means, is executed. The data processing means are connected to the data storage means via data bus means. The data bus means include an address and data bus, bus driver means and a read and write amplifier for the data storage means. The address and data bus has a number of N parallel data leads via which a number of N-bit data can be transmitted in parallel, or simultaneously, during a transmission operation.

The known data carrier device also includes power supply means which are arranged for power supply of the data carrier as well as the data bus means in this case.

The data processing means of the data carrier device are arranged to compare received key data with key data stored in the data storage means and to output confidential data, stored in the data storage means of the data carrier device, in the case of correspondence.

Persons who are not authorized to use the known data carrier device and do not know the key data stored in the data storage means have attempted to retrieve this key data in order to make the data carrier device output the confidential data. Because the known data carrier device is constructed as an integrated circuit, such unauthorized persons have attempted to retrieve the key data stored in the data storage means by analysis of the power consumption of the integrated circuit that can be measured on a contact of the integrated circuit.

The power consumption, and notably the drawing of current by the data bus means, is dependent on the program routine executed in the processing means, which routine may include, for example a different number of read operations from or write operations in the data storage means during which the read and write amplifiers of the data bus means draw a comparatively large amount of current in the data storage means. In order to impede the analysis by non-authorized persons of the current drawn by the data carrier device during output of a plurality of feasible key data in order to determine the correct key data stored in the data storage means, a "symmetrical" program routine is used in the known data carrier device. In the case of a "symmetrical" program routine, parts of the program routine which are comparable in respect of the drawing of current by the transfer means of the data carrier device are executed irrespective of whether a comparison of key data in the processing means produces correspondence or not.

However, it has been found that the current drawn by the data bus means during a transmission of key data stored in the data storage means, via the data bus, in the known data carrier device is dependent on the key data and that key data stored in the data storage means can be retrieved by analysis of the current drawn by the data carrier device during a transmission operation. Consequently, confidential data stored in the data storage means of the known data carrier device are no longer secure.

It is an object of the invention to eliminate the described problems and to provide an improved data carrier device of the kind set forth in the first paragraph. For a data carrier device of the kind set forth in the first paragraph this object is achieved according to the invention in that transmission data containing key data can be stored in the data storage means, that the data bus means are arranged to transmit N-bit transmission data in each transmission operation, the transmission data always containing the same number of M bits of value "1" which is independent of the key data and the power consumption of the data bus means being independent of the key data, and that the data bus means include selection means which are arranged to select, after a transmission operation, a number of K bits, constituting the key data, from the total of N transmitted bits of the transmission data.

Transmission data which contains confidential data, such as key data, and is stored in the data storage means is thus transmitted, via the data bus, to the processing means by the transmission means. Such transmission data is characterized in that it includes a given, always the same number of M bits of value "1". Because the current drawn by the data bus means for the reading out of data from the data storage means and for the transmission of data via the data bus is dependent on the number of bits of value "1', the current drawn by the data carrier device is always the same during the transmission, via the data bus, of transmission data which may include arbitrary key data. Therefore, confidential data stored in the data storage means cannot be retrieved by analysis of the current drawn by the data carrier device, so that confidential data in the data carrier device is particularly secure.

It has been found that the steps disclosed in Claim 2 are advantageously taken for a data carrier device as disclosed in Claim 1. This offers the advantage that arbitrary confidential data processed in the processing means, such as key data, can be inserted in transmission data by the insertion means so as to be transmitted by the data processing means, via the data bus, to the data storage means or further processing means, while precluding successful analysis of the current drawn by the data carrier device in order to retrieve the confidential data.

It has been found that the steps disclosed in Claim 3 are advantageously taken for the data carrier device disclosed in Claim 1. This offers the advantage that a particularly large number of confidential data to be transmitted via the data bus, for example key data, can be transmitted in each transmission operation, the same number of M bits of the transmission data always having the value "1", nevertheless with arbitrary values of the K bits of the confidential data.

It has been found that the steps disclosed in Claim 4 are advantageously taken for a data carrier device as described in Claim 3. This offers the advantage that the selection means may have a particularly simple construction and that the data bus may also be formed by two parallel data leads.

It is to be noted that the current drawn by the data carrier device, and notably that drawn by the data bus means, is also dependent on what data was transmitted via the data bus during a previous transmission operation. In the case of a data lead of the data bus which was charged to a given potential during a preceding transmission operation, representing the value "1" of a bit transmitted via this data lead, and which should have this potential again for a subsequent transmission operation, the data bus means practically do not draw any current. However, when the potential of a data lead must be changed for a subsequent transmission operation, the data bus means will take up current for this purpose. Confidential data transmitted during this data transmission can be retrieved on the basis of knowledge of the data transmitted via the data bus during a previous transmission operation and by additional analysis of the current drawn by the data means during a next data transmission.

It has been found that the steps disclosed in Claim 5 are advantageously taken for a data carrier device as described in Claim 1. This offers the advantage that the current drawn by the data bus means during a transmission of confidential data is not dependent on data last transmitted via the data bus.

It has been found that the steps disclosed in Claim 6 are advantageously taken for a data carrier device as described in Claim 1. For a smart card for contactless communication with a transmitter and receiver device the advantage it is thus achieved that the confidential data stored in the smart card is particularly secure.

It has been found that the steps disclosed in Claim 7 are advantageously taken for a data carrier device as described in Claim 1. For a smart card for contact-type communication with a write and read device it is thus achieved that the confidential data stored in the smart card is particularly secure.

The invention will be described in detail hereinafter on the basis of an embodiment which is shown in the drawings, however, without the invention being restricted thereto.

Fig. 1 shows a block diagram of a smart card which includes a data carrier which is arranged to communicate with a write/read device via a contact field.

Fig. 2 shows a transmission table which contains transmission data and confidential data such as, for example, key data.

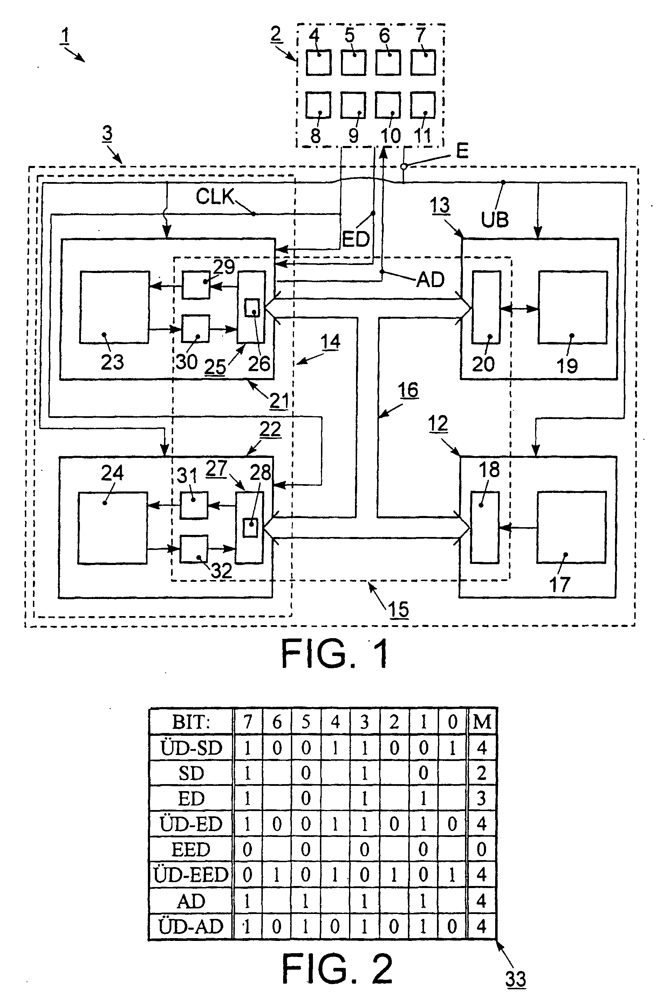

Fig. 1 shows a smart card 1 which includes a contact field 2 and a data carrier 3 which is formed by an integrated circuit. The smart card 1 stores transmission data UD-SD of key data SD which authorize a user of the smart card 1 to access confidential data. The contact field 2 includes contact pads 4, 5, 6, 7, 8, 9, 10 and 11 which are connected to the data carrier device 3. The data carrier device 3 is arranged to communicate, via the contact field 2, with a write/read device which is not shown in Fig. 1 and includes a contact field which corresponds to the contact field 2.

A write/read device can supply a power supply terminal E of the data device 3 with an operating voltage UB, via a contact pad of the contact field 2, said power supply terminal E constituting power supply means for the data carrier device 3. A write/read device can supply the data carrier device 3 with a system clock CLK via another contact pad of the contact field 2. The data carrier device 3 can be supplied with receiving data ED and can output processed data as output data AD to a write/read device via further contact pads of the contact field 2.

The data carrier device 3 includes program storage means 12, data storage means 13 and processing means 14 which are connected to the data bus means 15 for communication. The data bus means 15 include a data bus 16 with a number of N = 8 parallel data leads via which N = 8 bit data can be transmitted in parallel or simultaneously during each transmission operation. Furthermore, data constituting an address can also be transmitted via the data bus 16, said data indicating, for example a storage address in the data storage means 13 at which the data is to be stored in or wherefrom the data is to be read out from the data storage means 13.

The program storage means 12 include a program storage stage 17 which is formed by a so-called ROM (read only memory) and in which data constituting a program routine is stored, said routine being executed in the processing means 14 in the presence of an operating voltage UB and a system clock CLK. The program storage means 12 also include a read amplifier 18 which is arranged to interpret storage locations of the program storage stage 17 and to read out data constituting a program routine from the program storage stage 17.

The data storage means 13 include a data storage stage 19 which is formed by a so-called EEPROM (electrically erasable programmable read only memory) and in which confidential data, for example key data SD, can be stored as will be described in detail hereinafter. The data storage means 13 also include a write/read amplifier 20 which is arranged to interpret storage locations of the data storage stage 19 and to read out data from the data storage stage 19 or to store data in the data storage stage 19.

The processing means 14 arc arranged to process data such as, for example, key data SD. To this end, the processing means 14 include a processor 21 and a co-processor 22. The processor 21 includes a processor arithmetic stage 23 and the co-processor 22 includes a co-processor arithmetic stage 24. A program routine which is read out from the program storage means 13 is executed in the processor arithmetic stage 23 in order to process data and in the co-processor arithmetic stage 24 there is executed a program routine which is specified by a hardware circuit and can be modified inter alia by the key data applied to the co-processor arithmetic stage 24 as will be described in detail hereinafter.

When the smart card 1 is connected to a write/read device via its contact field 2, the operating voltage UB = 5 V can be applied, via the contact field 2, to the program storage means 12, the data storage means 13 and the processing means 14. Furthermore, in this case the system clock CLK = 5 MHz can be applied to the processing means 14, via the contact field 2, which system clock defines the speed of execution of the program routines in the processor arithmetic stage 23 and the co-processor arithmetic stage 24. During a communication with a write/read device, receiving data ED can be applied to the processor 21 via a contact pad of the contact field 2 and the processor 21 can deliver output data AD to the write/read device via a contact pad of the contact field 2.

The processor 21 includes first bus driver means 25 which are connected to the data leads of the data bus 16. The first bus driver means 25 are arranged to charge, for each data transmission operation, individual ones of the N = 8 data leads to a potential P1 and to charge the other ones of the N = 8 data leads of the data bus 16 to a potential P2 in order to transmit N = 8 bits in parallel. For example, in order to transmit a byte which consists of N = 8 bits and has the value "2", corresponding in binary form to the bit sequence "0000 0010", from the processor 21 to the data storage means 13 in one data transmission operation, the first bus driver means 25 are arranged to charge the second data lead of the N = 8 data leads to the potential P1 which characterizes a bit "1", and to charge the remaining seven data leads to the potential P2 which characterizes a bit "0" as is generally known for bus driver means.

It is to be noted that the power consumption of bus driver means, and hence the power consumption of data bus means, during a transmission operation is dependent on how many of the N = 8 data leads are charged to the potential P1 and how many of the N = 8 data leads are charged to the potential P2. For example, when the potential P1 corresponds to 5 V and the potential P2 to 0 V and only a single data lead has to be charged to the potential P1 of 5 V as in the above example, during this transmission operation the power consumption of these data bus means will be less than when several of the N = 8 data leads have to be charged to the potential P1 of 5 V.

It is also to be noted that during a transmission operation the power consumption of bus driver means, and hence the power consumption of data bus means, is also dependent on which data was transmitted via the data leads during a preceding transmission operation. For example, when a data lead of the data bus which was charged or discharged to the potential P2 of 0 V during a preceding transmission operation and should again have the potential P2 of 0 V for the next transmission operation, the bus driver means practically will not take up power or current. When the potential of this data lead changes for a next transmission operation so that it must be charged to the potential P1 of 5 V, the bus driver means will take up power or current for this purpose.

The first bus driver means 25 of the data bus means 15 preferably include first data bus potential means 26 which charge or discharge the N = 8 data leads of the data bus 16 to a uniform potential P3 prior to a transmission of transmission data UD. The first data bus potential means 26 are arranged to discharge the N = 8 data leads of the data bus 16 to the potential P3 = P2 = 0 V. This offers the advantage that the power consumption of or the current drawn by the data bus means 15 during a transmission of confidential data is not dependent on a previous transmission operation via the data bus 16 as will be described in detail hereinafter on the basis of an example.

In the case of a transmission operation during which data is transmitted to the processor 21 via the data leads of the data bus 16, the first bus driver means 25 are also arranged to detect the potentials P1 and P2 of the individual data leads and to output received data as is generally known for bus driver means.

The co-processor 22 includes second bus driver means 27 with second data bus potential means 28 whose operation corresponds to that described for the first bus driver means 25 with associated first data bus potential means 26 of the processor 21. The operation of the read amplifier 18 of the program storage means 12 and the write/read amplifier 20 of the data storage means 13 also corresponds to that described for the first bus driver means 25 of the processor 21; however, they do not include data bus potential means.

The data bus 16, the read amplifier 18, the write/read amplifier 20, the first bus driver means 25 and the second bus driver means 27 are included in the data bus means 15 and are arranged to transmit data between the program storage means 12, the data storage means 13, the processor 21 and the co-processor 22.

The processor 21 includes first selection means 29 which are also included in the data bus means 15 and are connected to the first bus driver means 25 and to the processor arithmetic stage 23. The first selection means 29 are arranged to select, after a transmission operation, a number of K bits from the total of N = 8 transmitted bits of the transmission data UD, the selected K bits contain the actual information to be transmitted and form, for example confidential key data. The first selection means 29 are arranged to select a number of K = N/2 = 8/2 = 4 bits, constituting key data SD, from the total of N = 8 bits of the transmission data UD-SD transmitted in each transmission operation; the transmission data UD-SD include a number of M = N/2 = 4 bits of value "1", which number is always the same and independent of the key data SD.

This offers the advantage that always the same number of M = 4 data leads of the data bus 16 must be charged to the potential P1 and the other N-M = 4 data leads must be charged to the potential P2, so that the data bus means 15 have a power consumption which is independent of transmitted data which is contained in the transmission data UD, for example key data SD. It is also an advantage that the N = 8 bits of the transmission data UD, transmitted in each transmission operation, form the number of K = 4 bits, so that a particularly large number of bits constituting data is transmitted in each transmission operation as will be described in detail hereinafter.

The first selection means 29 are arranged to select every second bit of transmission data UD received during a transmission operation, bits of the transmission data which are not selected by the first selection means 29 always having the inverse value with respect to the bits selected by the first selection means 29. This will be described in detail hereinafter on the basis of an example.

The processor 21 also includes first insertion means 30 which are also included in the data bus means 15 and are connected to the first bus driver means 25 and to the processor arithmetic stage 23. The first insertion means 30 are arranged to insert a number of L = N-K = 8-4 = 4 bits in K = 4 bits, forming key data SD, in order to obtain transmission data ÜD having N = 8 bits, where M = 4 of the N = 8 bits have the value 1. The first insertion means 30 are arranged to insert each time one of the L = 4 bits between two of the K = 4 bits forming data; for the L = 4 bits each time inverse values of the K = 4 bits are then inserted as will be described in detail hereinafter on the basis of an example.

This offers the advantage that confidential data processed by the processor 21, for example key data SD, can be transmitted as transmission data ÜB, such as, for example, transmission data UB-SD of key data SD, while the power consumption of the bus driver means 25 is independent of the processed confidential data as will be described in detail hereinafter.

The co-processor 22 includes second selection means 31 whose operation corresponds to the described operation of the first selection means 29 of the processor 21, and second insertion means 32 whose operation corresponds to the described operation of the first insertion means 30 of the processor 21.

The operation of the smart card 1 will be described in detail hereinafter on the basis of an example and with reference to a transmission table 33 as shown in Fig. 2. The transmission table 33 contains bit sequences of N = 8 bits of transmission data UB and of K = 4 bits which are also contained in the transmission data UB. The last column of the transmission table 33 states the number of M bits having the value 1 for the bit sequence of the relevant line. Bit sequences of transmission data UD have a number of M = 4 bits of the value 1, independent of the data contained in the transmission data ÜD.

The second line of the transmission table 33 contains the bit sequence of transmission data ÜD-SD which is stored in the data storage stage 19 of the data storage means 13 and contains the key data SD indicated on the third line of the transmission table 33. The key data SD stored in the data storage stage 19 characterizes the authorization of a user of the smart card 1 to access confidential data stored in a write/read device. For example, a user of the smart card could be authorized, by way of key data SD = "1010" stored in the data storage stage 19, to see confidential data of the security level "3" stored in a write/read device. A user of another smart card, whose storage stage stores the key data SD = "1100", however, could be authorized to see confidential data of the security level "1" stored in a write/read device. The key data SD stored in the storage stage 19, therefore, is strictly confidential.

When the smart card 1 is inserted into a write/read device and connected thereto via the contact field 2, an operating voltage UB and a system clock CLK are applied to the processor 21 and the co-processor 22. The processor 21 is arranged to read out a program routine from the program storage means 12 upon reception of an operating voltage UB and a system clock CLK; this program routine is subsequently executed in the processor 21. Such a program routine is executed in the processor 21 until the instant at which the smart card 1 is removed from the write/read device.

During the execution of the program routine in the processor arithmetic stage 23, the processor 21 reads out the transmission data ÜB-SD of the key data SD from the data storage means 13. To this end, the first bus driver means 25 apply data, forming an address, to the write/read amplifier 20 via the data leads of the data bus 16.The write/read amplifier 20 is then arranged to read out the transmission data ÜB-SD of the key data SD from the data storage stage 19 and to charge the data leads "0", "3", "4" and "7" with the potential P1, because the bits of the bit sequence of the transmission data ÜB-SD of the key data SD stated on the second line of the transmission table 33 have the value "1" in these positions. Furthermore, the data leads "1", "2", "5" and "6" are charged with the potential P2, because the bits of the bit sequence of the transmission data ÜB-SD of the key data SD, stated on the second line of the transmission table 33 have the value "0" in these positions. The write/read amplifier 20 then draws a current which corresponds to the charging of four data leads with the potential P1 and the charging of four data leads with the potential P2.

The first bus driver means 25 are then arranged to detect the potentials P of the data leads of the data bus 16 and to output the transmission data ÜB-SD of the key data SD to the first selection means 29. Furthermore, subsequently all N = 8 data leads of the data bus 16 are discharged to the potential P3 = P2 = 0 V.

The first selection means 29 are arranged to select the K = 4 bits in the positions "1", "3", "5" and "7" of the bit sequence of the transmission data ÜB-SD of the key data SD and to output the key data SD to the processor arithmetic stage 23.

In conformity with the program execution in the processor arithmetic stage 23, the key data is applied to the co-processor 22. To this end, the key data SD is applied to the first insertion stage 30 which inserts a bit of inverse value after each bit of the bit sequence "1010" of the key data SD, so that ultimately the bit sequence "10011001" of the transmission data ÜB-SD of the key data SD is obtained again.

Subsequently, the key data SD contained in the transmission data ÜB-SD is transmitted, via the data bus means 15, to the co-processor arithmetic stage 24 during a transmission operation. The hardware circuit of the co-processor arithmetic stage 24 is configured to decrypt encrypted data by the key data SD applied thereto.

Because of this type of transmission of strictly confidential key data SD, contained in the transmission data ÜB-SD, from the data storage means 13 to the co-processor 22, via the processor 21, it is ensured that analysis of the power consumption of the smart card 1 during a transmission operation cannot reveal the strictly confidential key data SD.

It is now assumed that the write/read device, in which the smart card 1 has been inserted, outputs the receiving data ED, stated on the fourth line of the transmission table 33, to the processor 21 via the contact field 2. On the basis of the output data AD, output by the smart card 1 in response to the receiving data ED, the write/read device recognizes which confidential data of which security level may be displayed to the user of the smart card 1.

When the processor 23 receives receiving data ED from the write/read device, the processor arithmetic stage 23 outputs. in conformity with the program routine, the receiving data ED to the first insertion means 30. The first insertion means 30 then output the transmission data ÜB-ED of the receiving data ED, stated on the fifth line of the transmission table 33, to the first bus driver means 25. The hit sequence of the transmission data ÜD-ED of the receiving data ED again has M = 4 bits of the value 1, so that the first bus driver means 25 must charge four of the N = 8 data leads of the data bus 16, being at the potential P3, to the potential P1 and four of such leads to the potential P2. The power consumption of the first bus driver means 25, therefore, is advantageously independent of the receiving data ED contained in the transmission data ÜB-ED.

The potentials of the data leads of the data bus 16 are then detected by the second bus driver means 27 and the transmission data ÜD-ED of the receiving data ED is output to the second selection means 31 of the co-processor 22. The receiving data ED is selected by the second selection means 31 and applied to the co-processor arithmetic stage 24. Furthermore, the data leads of the data bus 16 are charged to the potential P3 by the second data bus potential means 28.

Upon reception of receiving data ED the co-processor arithmetic stage 24 is arranged to decrypt the receiving data ED, while utilizing the key data SD applied thereto, and to output decrypted receiving data EED to the second insertion means 32. The bit sequence of the decrypted receiving data EED is indicated on the sixth line and the bit sequence of the transmission data ÜB-EED of the decrypted receiving data EED, output by the second insertion means 32, is indicated on the seventh line of the transmission table 33. The transmission data ÜB-EED of the decrypted receiving data EED again have M = 4 bits of value 1, so that the second bus driver means 27 must charge four of the N = 8 data leads of the data bus 16, being at the potential P3, to the potential P1 and four of such data leads to the potential P2. The power consumption of the second bus driver means 27, therefore, is advantageously independent of the decrypted receiving data EED included in the transmission data ÜB-EED.

Decrypted receiving data EED applied to the processor arithmetic stage 23 by the data bus means 15 are subjected to further processing, in conformity with the executed program routine, during which all values of the bit sequence of the decrypted receiving data EED are inverted and a bit sequence of output data AD as stated on the eighth line of the transmission table 33 is obtained. This output data AD is transmitted, while included in transmission data ÜD-AD of the output data AD, by the data bus means 15 to the data storage means 13 so as to be stored in the data storage stage 19. The transmission data ÜD-AD of the output data AD, stated on the ninth line of the transmission table 33, then again has M = 4 bits of value 1, with the result that the first bus driver means 25 must charge four of the N = 8 data leads of the data bus 16, being at the potential P3, to the potential P1 and four data leads to the potential P2. The power consumption of the first bus driver means 25, therefore, is advantageously independent of the output data AD contained in the transmission data UD-AD.

The processor arithmetic stage 23 then outputs the output data AD, via the contact field 2, to the write/read device which compares the output data AD with the output data AD expected by the write/read device upon output of the receiving data ED by the smart card 1, and displays the confidential data of the security level for which the user of the smart card 1 is authorized on a monitor of the write/read device.

This offers the advantage that the power consumption of the data bus means 15 is the same throughout all transmission operations for transmission data ÜB and also independent of the confidential data contained in the transmission data.

It is to be noted that a bit sequence of confidential data, for example the key data SD, may also include far more than four bits as in the described case. The data bus should then comprise a larger number of parallel data leads or parts of the confidential data should be transmitted in successive transmission operations.

It is also to be noted that the insertion means could also insert L = 4 bits in other positions, for example K = 4 bits of data in the positions "0", "1", "2" and "3" of transmission data ÜD and L = 4 bits in the positions "4", "5", "6" and "7" of the transmission data ÜD; the values of the L bits should then be the inverse of the values of the K bits of data. However, it has been found that it is very attractive when L bits are inserted as described on the basis of the example for the first insertion means 30 and the second insertion means 32. This is because the bit sequence of the transmission data ÜB can in that case be subdivided, for example into four parts for the transmission of each time only two bits via two parallel data leads of a data bus; in that case it would be necessary to charge one data line to the potential P1 and one data line to the potential P2 during each of the four successive transmission operations, and the power consumption of the data bus means would thus again be independent of the transmitted data contained in the transmission data ÜD.

Furthermore, it is to be noted that a data carrier device according to the invention can be configured in a plurality of different, for example integrated, circuits in which confidential data is transmitted via a data bus which includes at least two parallel data leads.

It is also to be noted that confidential data with K = 6 bits per transmission operation could be transmitted, for example via a data bus with N = 16 data leads. In that case insertion means should insert L = N-K = 16-6 = 10 bits, but at least L = 6 bits, in order to obtain transmission data ÜD with N = 16 bits and to enable arbitrary bit sequences of K bits of data.

Moreover, it is to be noted that, when the kind of confidential data is known, K > L is also possible. For example, if it is known that the K = 6 bits of confidential data contain a bit of value 1 in no more than two positions only and that the remaining bits are of value 0, L = 2 bits is feasible. In this example M would then be 2 and the power consumption of the data bus means would again be the same during each transmission operation.

Finally, it is to be noted that data bus potential means may also be provided in a write/read amplifier. Furthermore, data bus potential means for charging or discharging the data leads of a data bus after each transmission operation in a data carrier device could also be provided exclusively in the processor or exclusively in the co-processor or exclusively in a write/read amplifier.

## Claims

1. A data carrier device (3) which includes
. data storage means (13) for the storage of key data (SD),
. processing means (14) for the processing of key data (SD),
. data bus means (15) which include a data bus (16) with a number of N parallel data leads which connects the data storage means (13) to the processing means (14) and via which N-bit key data (SD) can be transmitted in parallel during each transmission operation, and
. power supply means (E) for power supply (UB) of the data carrier device (3),
**characterized in that**
transmission data (ÜD-SD) containing key data (SD) can be stored in the data storage means (13),
that the data bus means (15) are arranged to transmit N-bit transmission data (ÜD-SD) in each transmission operation, the transmission data (ÜD-SD) always containing the same number of M bits of value "1" which is independent of the key data (SD) and the power consumption of the data bus means (15) being independent of the key data (SD),
and that the data bus means (15) include selection means (29, 31) which are arranged to select, after a transmission operation, a number of K bits, constituting the key data (SD) from the total of N transmitted bits of the transmission data (ÜD-SD).

2. A data carrier device (3) as claimed in Claim 1, **characterized in that** the data bus means (15) include insertion means (30, 32) which are arranged to insert a number of at least L = N-K bits in K bits, constituting key data (SD), in order to obtain N-bit transmission data (ÜD), where M bits of the total number of N bits are of value 1.

3. A data carrier device (3) as claimed in Claim 1, **characterized in that** the selection means (29, 31) are arranged to select a number of K = N/2 bits, constituting key data (SD), from the total number of N bits of the transmission data (ÜD-SD) transmitted in each transmission operation, transmission data (ÜD-SD) having a number of M = N/2 bits of value 1 which is always the same and independent of the key data (SD).

4. A data carrier device (3) as claimed in Claim 3, **characterized in that** the selection means (29, 31) are arranged to select every second bit of transmission data (ÜD-SD, ÜD-ED, ÜD-EED, ÜD-AD), bits of the transmission data (ÜD-SD, ÜD-ED, ÜD-EED, ÜD-AD) which are not selected by the selection means (29, 31) having each time the inverse value with respect to the bits selected by the selection means (29, 31).

5. A data carrier device (3) as claimed in Claim 1, **characterized in that** the data bus means (15) include data bus potential means (26, 28) which are arranged to charge or discharge, prior to a transmission of transmission data (ÜD-SD, ÜD-ED, ÜD-EED, ÜD-AD), the N data leads of the data bus (16) to a uniform potential (P3).

6. A data carrier device (3) as claimed in Claim 1, **characterized in that** receiving means for receiving encrypted data (ED) include a receiving aerial, and that the data carrier device (3) in the form of an integrated circuit is provided in a smart card.

7. A data carrier device (3) as claimed in Claim 1, **characterized in that** receiving means for receiving encrypted data (ED) include at least one contact (4, 5, 6, 7, 8, 9, 10, 11), and that the data carrier device (3) in the form of an integrated circuit is provided in a smart card (1).

## Patentansprüche

1. Datenträgereinrichtung (3) mit
. Datenspeichermitteln (13) zum Speichern von Schlüsseldaten (SD),
. Verarbeitungsmitteln (14) zum Verarbeiten von Schlüsseldaten (SD),
. Datenbusmitteln (15), die einen Datenbus (16) mit einer Anzahl von N parallelen Datenleitungen aufweisen, der die Datenspeichermittel (13) mit den Verarbeitungsmitteln (14) verbindet und über den während jedes Übertragungsvorganges N-Bit-Schlüsseldaten (SD) parallel übertragen werden können, und
. Energieversorgungsmitteln (E) zur Energieversorgung (UB) der Datenträgereinrichtung (3),
**dadurch gekennzeichnet, daß**
in den Datenspeichermitteln (13) Schlüsseldaten (SD) enthaltende Übertragungsdaten (ÜD-SD) gespeichert werden können,
daß die Datenbusmittel (15) zum Übertragen von N-Bit-Übertragungsdaten (ÜD-SD)je Übertragungsvorgang ausgebildet sind, wobei die Übertragungsdaten (ÜD-SD) eine von den Schlüsseldaten (SD) unabhängige, immer gleiche Anzahl von M Bits mit dem Wert "1" enthalten und der Energieverbrauch der Datenbusmittel (15) von den Schlüsseldaten (SD) unabhängig ist,
und daß die Datenbusmittel (15) Auswahlmittel (29, 31) aufweisen, die ausgebildet sind, um nach einem Übertragungsvorgang aus den insgesamt N übertragenen Bits der Übertragungsdaten (ÜD-SD) eine Anzahl von K Bits auszuwählen, die die Schlüsseldaten (SD) bilden.

2. Datenträgereinrichtung (3) nach Anspruch 1, **dadurch gekennzeichnet, daß** die Datenbusmittel (15) Einfügemittel (30, 32) aufweisen, die zum Einfügen einer Anzahl von zumindest L = N - K Bits in K Schlüsseldaten (SD) bildende Bits ausgebildet sind, um N-Bit-Übertragungsdaten (ÜD) zu erhalten, wobei M der insgesamt N Bits den Wert "1" haben.

3. Datenträgereinrichtung (3) nach Anspruch 1, **dadurch gekennzeichnet, daß** die Auswahlmittel (29, 31) zum Auswählen einer Anzahl von K = N/2 Schlüsseldaten (SD) bildenden Bits aus insgesamt N je Übertragungsvorgang übertragenen Bits der Übertragungsdaten (ÜD-SD) ausgebildet sind, wobei Übertragungsdaten (ÜD-SD) eine von den Schlüsseldaten (SD) unabhängige immer gleiche Anzahl von M = N/2 Bits mit dem Wert "1" aufweisen.

4. Datenträgereinrichtung (3) nach Anspruch 3, **dadurch gekennzeichnet, daß** die Auswahlmittel (29, 31) zum Auswählen jedes zweiten Bits von Übertragungsdaten (ÜD-SD, ÜD-ED, ÜD-EED, ÜD-AD) ausgebildet sind, wobei von den Auswahlmitteln (29, 31) nicht ausgewählte Bits der Übertragungsdaten (ÜD-SD, ÜD-ED, ÜD-EED, ÜD-AD) jeweils inverse Werte zu von den Auswahlmitteln (29, 31) ausgewählten Bits aufweisen.

5. Datenträgereinrichtung (3) nach Anspruch 1, **dadurch gekennzeichnet, daß** die Datenbusmittel (15) Datenbuspotentialmittel (26, 28) aufweisen, die vor einer Übertragung von Übertragungsdaten (ÜD-SD, ÜD-ED, ÜD-EED, ÜD-AD) zum Aufladen oder Entladen der N Datenleitungen des Datenbusses (16) auf ein einheitliches Potential (P3) ausgebildet sind.

6. Datenträgereinrichtung (3) nach Anspruch 1, **dadurch gekennzeichnet, daß** Empfangsmittel zum Empfangen verschlüsselter Daten (ED) eine Empfangsantenne aufweisen und daß die Datenträgereinrichtung (3) als integrierter Schaltkreis in einer Smart Card vorgesehen ist.

7. Datenträgereinrichtung (3) nach Anspruch 1, **dadurch gekennzeichnet, daß** Empfangsmittel zum Empfangen verschlüsselter Daten (ED) zumindest einen Kontakt (4, 5, 6, 7, 8 , 9, 10, 11) aufweisen und daß die Datenträgereinrichtung (3) als integrierter Schaltkreis in einer Smart Card (1) vorgesehen ist.

## Revendications

1. Dispositif de support de données (3) qui comprend :
- des moyens de mémorisation de données (13) pour la mémorisation de données clés (SD) ;
- des moyens de traitement (14) pour le traitement de données clés (SD) ;
- des moyens de bus de données (15) qui comprennent un bus de données (16) comportant un nombre de N conducteurs de données parallèles qui connectent les moyens de mémorisation de données (13) aux moyens de traitement (14) et par le biais desquels des données clés de N bits (SD) peuvent être transmises en parallèle pendant chaque opération de transmission, et
- des moyens d'alimentation (E) pour l'alimentation (UB) du dispositif de support de données (3) ;
**caractérisé en ce que**
des données de transmission (ÜD-SD) contenant des données clés (SD) peuvent être mémorisées dans les moyens de mémorisation de données (13) ;
**en ce que** les moyens de bus de données (15) sont propres à transmettre des données de transmission de N bits (ÜD-SD) à chaque opération de transmission, les données de transmission (ÜD-SD) contenant toujours le même nombre de M bits de valeur "1" qui sont indépendantes des données clés (SD) et la consommation d'énergie des moyens de bus de données (15) étant indépendante des données clés (SD), et
**en ce que** les moyens de bus de données (15) comprennent des moyens de sélection (29, 31) qui sont propres à sélectionner, après une opération de transmission, un nombre de K bits, formant les données clés (SD) parmi le total de N bits transmis des données de transmission (ÜD-SD).

2. Dispositif de support de données (3) suivant la revendication 1, **caractérisé en ce que** les moyens de bus de données (15) comprennent des moyens d'insertion (30, 32) qui sont propres à insérer un nombre d'au moins L = N-K bits dans K bits, constituant des données clés (SD), afin d'obtenir des données de transmission de N bits (ÜD), où M bits du nombre total de N bits sont de valeur 1.

3. Dispositif de support de données (3) suivant la revendication 1, **caractérisé en ce que** les moyens de sélection (29, 31) sont propres à sélectionner un nombre de K = N/2 bits, constituant des données clés (SD), parmi le nombre total de N bits des données de transmission (ÜD-SD) transmises à chaque opération de transmission, des données de transmission (ÜD-SD) comportant un nombre de M = N/2 bits de valeur 1 qui est toujours le même et est indépendant des données clés (SD).

4. Dispositif de support de données (3) suivant la revendication 3, **caractérisé en ce que** les moyens de sélection (29, 31) sont propres à sélectionner un bit sur deux de données de transmission (ÜD-SD, ÜD-ED, ÜD-EED, ÜD-AD), les bits des données de transmission (ÜD-SD, ÜD-ED, ÜD-EED, ÜD-AD) qui ne sont pas sélectionnés par les moyens de sélection (29, 31) présentant à chaque fois la valeur inverse par rapport aux bits sélectionnés par les moyens de sélection (29, 31).

5. Dispositif de support de données (3) suivant la revendication 1, **caractérisé en ce que** les moyens de bus de données (15) comprennent des moyens de potentiel de bus de données (26, 28) qui sont propres à charger ou à décharger, avant une transmission de données de transmission (ÜD-SD, ÜD-ED, ÜD-EED, ÜD-AD), les N conducteurs de données du bus de données (16) à un potentiel uniforme (P3).

6. Dispositif de support de données (3) suivant la revendication 1, **caractérisé en ce que** des moyens de réception pour recevoir des données chiffrées (ED) comprennent une antenne de réception et **en ce que** le dispositif de support de données (3) sous la forme d'un circuit intégré est prévu dans une carte à mémoire.

7. Dispositif de support de données (3) suivant la revendication 1, **caractérisé en ce que** des moyens de réception pour recevoir des données chiffrées (ED) comprennent au moins un contact (4, 5, 6, 7, 8, 9, 10, 11) et **en ce que** le dispositif de support de données (3) sous la forme d'un circuit intégré est prévu dans une carte à mémoire (1).
